# FASCICULE DE BREVET EUROPEEN

(11) **EP 2 953 853 B1**
(45) Date de publication et mention de la délivrance du brevet: **23.11.2016**
(21) Numéro de dépôt: 14703108.2
(22) Date de dépôt: 17.01.2014
(51) Int. Cl.: F02C 7/05, F02C 7/042, B64G 1/40, B64G 1/14, B64D 33/02

(54) **AVION SPATIAL**
RAUMFLUGZEUG
SPACE AIRCRAFT

(30) Priorité: 06.02.2013 FR 1300242
(43) Date de publication de la demande: 16.12.2015
(73) Titulaire: Airbus Defence and Space SAS, 78130 Les Mureaux (FR)
(72) Inventeur: FERREIRA, Eugénio, 31400 Toulouse (FR); PRAMPOLINI, Marco, F-78240 Chambourcy (FR); CORABOEUF, Yohann, F-33700 Merignac (FR)
(74) Mandataire: Gevers & Orès
(86) Numéro de dépôt international: PCT/FR2014/000009
(87) Numéro de publication internationale: WO 2014/122369

(56) Documents cités:
- JP-A- H0 357 867
- US-A- 5 337 975
- US-A1- 2007 119 149
- US-A1- 2008 283 677

## Description

La présente invention concerne un avion spatial, c'est-à-dire un avion capable de décoller du sol de façon usuelle, d'atteindre une altitude d'au moins cent kilomètres, de voler à une vitesse transsonique ou même supersonique, puis d'atterrir également de façon usuelle pour un avion.

Les avions spatiaux à un seul étage de ce type, aptes à voler à des vitesses supérieures à Mach 0,9, comportent, à la fois, des moyens de propulsion anaérobie, tels que des moteurs fusée, et des moyens de propulsion aérobie, tels que des turbomoteurs.

Un tel avion est connu de US 2008/283677 A1, qui est considéré comme l'art antérieur le plus proche et décrit les caractéristiques du préambule de la revendication 1.

Au cours du vol d'un tel avion spatial, il peut se faire que seuls les moyens de propulsion anaérobie soient en fonctionnement, les moyens de propulsion aérobie étant alors inactifs ou éteints. Dans une telle phase de vol, il en résulte donc que l'entrée d'air des moyens de propulsion aérobie engendre une traînée importante, freinant le vol de l'avion spatial.

La présente invention a pour objet de remédier à cet inconvénient.

A cette fin, selon l'invention, l'avion spatial à un seul étage, qui est apte à voler à des vitesses supérieures à Mach 0,9 et qui comporte :
- des moyens de propulsion anaérobie, et
- des moyens de propulsion aérobie, qui sont pourvus d'au moins une entrée d'air,
est remarquable en ce qu'il comporte au moins un volet mobile qui est monté sur la structure de l'avion spatial, en avant de ladite entrée d'air, et qui peut se déplacer, dans les deux sens, entre une première position pour laquelle ledit volet mobile dégage ladite entrée d'air et s'applique contre le fuselage dudit avion spatial et une seconde position pour laquelle ledit volet mobile masque ladite entrée d'air au flux aérodynamique autour dudit avion spatial en empêchant l'air de pénétrer dans ladite entrée d'air.

Ainsi, grâce à un tel volet mobile, ladite entrée d'air peut être isolée du flux d'air autour de l'avion, de sorte que sa traînée peut être réduite, lorsque les moyens de propulsion aérobie ne sont pas en fonctionnement. On remarquera de plus que, grâce audit volet mobile, lesdits moyens de propulsion aérobie sont alors protégés contre les vitesses de gaz excessives et les échauffements conséquents.

Bien que ledit agencement de volet mobile puisse se déplacer de différentes manières, il est avantageux qu'il se déplace en rotation entre lesdites première et seconde positions.

De préférence, ledit volet unique est bombé pour lui permettre d'épouser la forme dudit fuselage lorsqu'il occupe ladite première position rétractée. Le volet unique présente de plus avantageusement une forme arrondie en regard de ladite entrée d'air, afin de réduire encore la traînée de l'ensemble dudit volet et de ladite entrée d'air dans ladite seconde position déployée.

Les figures du dessin annexé feront bien comprendre comment l'invention peut être représentée. Sur ces figures, des références identiques désignent des éléments semblables.
La figure 1 montre, en perspective, un avion spatial selon la présente invention, équipé de volets de masquage d'entrée d'air en position rétractée, dégageant les entrées d'air de turbomoteur.
La figure 2 montre, également en perspective, l'avion spatial de la figure 1, lesdits volets étant en position déployée masquant les entrées d'air des turbomoteurs.
Les figures 3 et 4 illustrent les cinématiques d'un volet de masquage de l'avion spatial des figures 1 et 2.

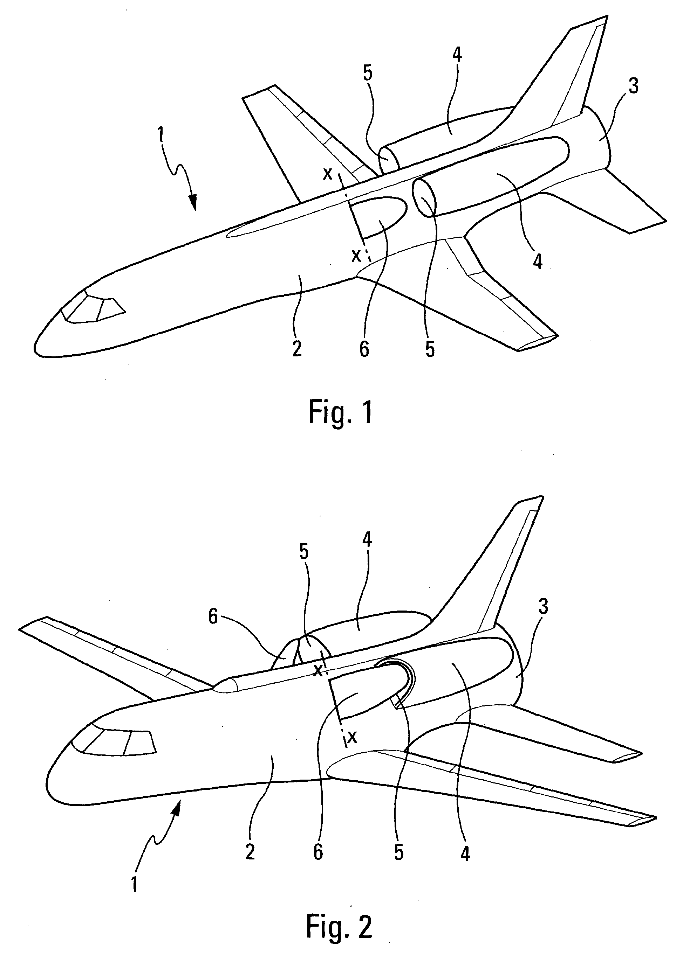

L'avion spatial 1, conforme à la présente invention et montré par les figures 1 et 2, ne comporte qu'un seul étage ayant un fuselage 2 et est apte à effectuer des vols transsoniques et/ou supersoniques.

Cet avion spatial 1 comporte au moins un moteur fusée 3 et deux turbomoteurs 4, comportant chacun une entrée d'air 5. Les turbomoteurs sont disposés latéralement à l'arrière du fuselage 2, de sorte que l'un des turbomoteurs 4 se trouve à gauche, et l'autre desdits turbomoteurs 4 se trouve à droite du fuselage 2.

Lorsque l'avion spatial est en vol transsonique ou supersonique et que les turbomoteurs 4 ne sont pas en fonctionnement, les entrées d'air 5 sont la source d'une traînée aérodynamique importante.

Aussi, pour remédier à cet inconvénient, l'avion spatial 1 des figures 1 et 2 comporte, devant chacune des deux entrées d'air 5, un volet rotatif 6, articulé autour d'un axe X-X de la structure dudit avion spatial. Chaque volet 6 peut se déplacer, dans les deux sens, entre une position rétractée (voir la figure 1), pour laquelle il est appliqué contre le fuselage 2 et il dégage l'entrée d'air 5 correspondante, et une position déployée (voir la figure 2) pour laquelle il masque cette entrée d'air 5 au flux aérodynamique entourant ledit avion spatial.

Ainsi, lorsque la vitesse de l'avion spatial 1 est élevée et que les turbomoteurs 4 ne fonctionnent pas, les entrées d'air 5 de ces derniers peuvent être masquées par les volets 6, de sorte que la traînée aérodynamique des entrées d'air 5 est réduite.

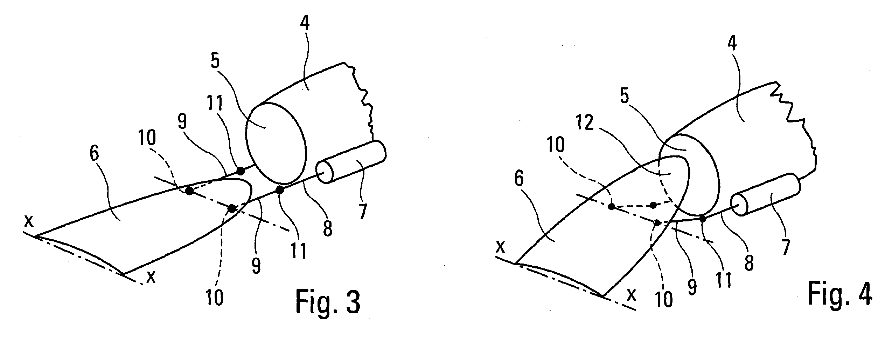

Pour actionner les volets 6 entre leur position rétractée et leur position déployée, et inversement, on peut utiliser le système illustré schématiquement sur les figures 3 et 4, comportant des vérins 7. La tige 8 de chaque vérin 7 est reliée au volet 6 correspondant par l'intermédiaire d'une bielle 9, articulée, d'un côté, audit volet 6 par une articulation 10 et, de l'autre côté, à ladite tige de vérin 8 par une articulation à genouillère 11.

Chaque volet 6 est bombé pour pouvoir épouser la forme du fuselage 2 en position rétractée (figure 1). De plus, pour réduire la traînée qu'il peut engendrer en position déployée (figure 2) son extrémité 12, qui est en regard de l'entrée d'air 5 correspondante, est arrondie.

## Revendications

1. Avion spatial (1) à un seul étage, qui est apte à voler à des vitesses supérieures à Mach 0,9 et qui comporte :
• des moyens de propulsion anaérobie (3), et
• des moyens de propulsion aérobie (4), qui sont pourvus d'au moins une entrée d'air (5),
**caractérisé en ce qu'**il comporte au moins un volet mobile (6) qui est monté sur la structure de l'avion spatial, en avant de ladite entrée d'air, et qui peut se déplacer, dans les deux sens, entre une première position pour laquelle ledit volet mobile (6) dégage ladite entrée d'air (5) et s'applique contre le fuselage (2) dudit avion spatial et une seconde position pour laquelle ledit volet mobile (6) masque ladite entrée d'air (5) au flux aérodynamique autour dudit avion spatial (1) en empêchant l'air de pénétrer dans ladite entrée d'air (5).

2. Avion selon la revendication 1,
**caractérisé en ce que** ledit volet mobile (6) se déplace en rotation entre lesdites première et seconde positions.

3. Avion selon l'une des revendications 1 ou 2,
**caractérisé en ce que** ledit volet mobile (6) est bombé pour lui permettre d'épouser la forme dudit fuselage (2) lorsqu'il occupe ladite première position.

4. Avion selon l'une des revendications 1 à 3,
**caractérisé en ce que** le ledit volet mobile (6) présente une forme arrondie en regard de ladite entrée d'air (5).

## Patentansprüche

1. Raumflugzeug (1) mit einer einzigen Stufe, das in der Lage ist, mit Geschwindigkeiten höher als Mach 0,9 zu fliegen und Folgendes umfasst:
• anaerobe Antriebsmittel (3), und
• aerobe Antriebsmittel (4), die mit mindestens einem Lufteintritt (5) versehen sind, **dadurch gekennzeichnet, dass** es mindestens eine bewegliche Klappe (6) umfasst, die an der Konstruktion des Raumflugzeuges vor dem Lufteintritt montiert ist, und die sich in die beiden Richtungen zwischen einer ersten Stellung, in welcher die bewegliche Klappe (6) den Lufteintritt (5) freigibt und gegen den Rumpf (2) des Raumflugzeuges anliegt, und einer zweiten Stellung verschieben lässt, in welcher die bewegliche Klappe (6) den Lufteintritt (5) für die aerodynamische Strömung um das Raumflugzeug (1) herum verdeckt, indem verhindert wird, dass die Luft in den Lufteintritt (5) eindringt.

2. Flugzeug nach Anspruch 1,
**dadurch gekennzeichnet, dass** die mobile Klappe (6) sich drehend zwischen der genannten ersten und zweiten Position verschiebt.

3. Flugzeug nach einem der Ansprüche 1 oder 2,
**dadurch gekennzeichnet, dass** die bewegliche Klappe (6) gewölbt ist, um ihr zu ermöglichen, sich an die Gestalt des Rumpfes (2) anzupassen, wenn es die erste Stellung einnimmt.

4. Flugzeug nach einem der Ansprüche 1 bis 3,
**dadurch gekennzeichnet, dass** die bewegliche Klappe (6) eine gerundete Gestalt hinsichtlich des Lufteintritts (5) darstellt.

## Claims

1. Single-storey space aircraft (1), which is capable of flying at speeds of greater than 0.9 mach, and which comprises:
• anaerobic propulsion means (3) and
• aerobic propulsion means (4), which are provided with at least one air entry (5),
**characterised in that** it comprises at least one movable flap (6) which is mounted on the framework of the space aircraft, in front of said air entry, and which can move, in both directions, between a first position for which said movable flap (6) clears said air entry (5) and is applied against the fuselage (2) of said space aircraft, and a second position for which said movable flap (6) covers said air entry (5) from the aerodynamic flow around said space aircraft (1), preventing air from penetrating into said air entry (5).

2. Aircraft according to claim 1,
**characterised in that** said movable flap (6) rotates between said first and second positions.

3. Aircraft according to either claim 1 or claim 2,
**characterised in that** said movable flap (6) is domed to allow it to fit the shape of said fuselage (2) when it occupies said first position.

4. Aircraft according to any of claims 1 to 3,
**characterised in that** said movable flap (6) is rounded opposite said air entry (5).
